# EUROPÄISCHE PATENTSCHRIFT

(11) **EP 0 577 940 B1**
(45) Veröffentlichungstag und Bekanntmachung des Hinweises auf die Patenterteilung: **12.03.1997**
(21) Anmeldenummer: 93106941.3
(22) Anmeldetag: 29.04.1993
(51) Int. Cl.: B29C 63/34, B29C 53/58, B61D 17/04, B62D 31/02

(54) **Verfahren zur integralen Herstellung eines Innenausbaus für Wagenkasten**
Process for integrated manufacturing of railroad car lining
Procédé de production intégrale de structure de revêtement de caisses de véhicules

(30) Priorität: 10.07.1992 CH 2180/92
(43) Veröffentlichungstag der Anmeldung: 12.01.1994
(73) Patentinhaber: INVENTIO AG, CH-6052 Hergiswil NW (CH)
(72) Erfinder: Anderegg, Kurt, CH-9424 Rheineck (CH)

(56) Entgegenhaltungen:
- EP-A- 0 024 157
- EP-A- 0 043 106
- EP-A- 0 489 294
- GB-A- 1 490 575

## Beschreibung

Die Erfindung bezieht sich auf ein Verfahren zur integralen Herstellung eines Innenausbaus für Wagenkasten mit einer selbsttragenden Kastenstruktur, bei dem in einem ersten Verfahrensschritt eine innere Wickelschicht auf einen formgebenden, wagenkastengrossen Wickelkern gewickelt wird, in einem zweiten Verfahrensschritt im Deckenbereich Kanäle, in Eckbereichen formgebende Isolationskörper und im Bodenbereich und in den Seitenwandbereichen längs verlaufende Metallschienen mit der inneren Wickelschicht verbunden werden, in einem dritten Verfahrensschritt der Raum zwischen den Metallschienen mit Isolationsschaum ausgefüllt wird, in einem vierten Verfahrensschritt der in den vorhergehenden Verfahrensschritten hergestellte Verbund mit einer äusseren Wickelschicht umwickelt wird, in einem fünften Verfahrensschritt der in den vorhergehenden Verfahrensschritten hergestellte Innenausbau vom formgebenden Wickelkern entformt wird und in einem sechsten Verfahrensschritt an den Kanälen Öffnungen und in den Seitenwänden Bohrungen angebracht werden.

Aus der Patentschrift GB 1 490 575 ist ein im Wickelverfahren hergestellter Wagenkasten bekannt, der eine innere Wickelschicht, ein Versteifungsgerippe, im Versteifungsgerippe angeordnete Isolation und eine äussere Wickelschicht aufweist. Ausserdem sind zwischen innerer und äusserer Wickelschicht Aussparungen zur Aufnahme von Lüftung, Heizung, Elektroinstallation, Beleuchtung und sanitären Einrichtungen vorgesehen. Innere Wickelschicht, Versteifungsgerippe, Isolation und äussre Wickelschicht bilden einen selbsttragenden Wagenkasten.

Ein Nachteil der bekannten Einrichtung liegt darin, dass die als Innenausbau dienende innere Wickelschicht mit dem Versteifungsgerippe unlösbar verbunden ist. Ein weiterer Nachteil der bekannten Einrichtung liegt darin, dass das Versteifungsgerippe den mit Harz getränkten Faserverbundwerkstoffen der inneren Wickelschicht spielfrei angepasst werden muss, was nur mit einer langwierigen und kostspieligen Montage machbar ist.

Hier will die Erfindung Abhilfe schaffen. Die Erfindung, wie sie in den Ansprüchen gekennzeichnet ist, löst die Aufgabe, die Nachteile des bekannten Wickelverfahrens zu vermeiden und ein Verfahren zu schaffen, mit dem ein vollständiger und von der tragenden Struktur des Wagenkastens unabhängiger Innenausbau herstellbar ist.

Die durch die Erfindung erreichten Vorteile sind im wesentlichen darin zu sehen, dass mit dem automatisierbaren Verfahren zur Herstellung des vollständigen Innenausbaus eine bedeutende Gewichts- und Kostenreduktion möglich ist. Ein weiterer Vorteil der Erfindung ist darin zu sehen, dass der üblicherweise immer gleichbleibende Innenausbau in Wagenkasten mit unterschiedlichen Tragstrukturen eingesetzt werden kann, was wiederum eine Produktion mit hohen Stückzahlen ermöglicht. Ein weiterer Vorteil ist darin zu sehen, dass durch das erfindungsgemässe Verfahren keine schwer trennbaren Verbindungen unterschiedlicher Materialien entstehen und dadurch den Ansprüchen an eine umweltgerechte Entsorgung Rechnung getragen werden. Ein weiterer Vorteil ist darin zu sehen, dass während einer Wagenkastenlebensdauer eine mehrmalige, kostengünstige Erneuerung des Innenausbaus machbar ist.

Im folgenden wird die Erfindung anhand von lediglich einen Ausführungsweg darstellenden Zeichnungen näher erläutert.

Es zeigen:
- Fig. 1: eine Wickelvorrichtung für Grossstrukturen, auf der das erfindungsgemässe Verfahren zur Herstellung eines vollständigen Innenausbaus durchgeführt wird,
- Fig. 2: das Anordnen von Kanälen und formgebenden Isolationskörpern im Deckenbereich auf einer in einem ersten Verfahrensschritt hergestellten inneren Wickelschicht des Innenausbaus,
- Fig. 3: das Einschieben des im Wickelverfahren hergestellten Innenausbaus in eine bestehende Kastenstruktur und das Verspannen des Innenausbaus in der Kastenstruktur,
- Fig. 4: ein fertig montierter Innenausbau in der Kastenstruktur,
- Fig. 5: Einzelheiten einer Verbindung zwischen Innenausbau und Kastenstruktur,
- Fig. 6: einen durch ein Einstiegsmodul und ein Krafteinleitungsmodul gebildeter Abschluss eines aus dem gewickelten Innenausbau und aus der Kastenstruktur bestehenden Wagenkastens,
- Fig. 7: Einzelheiten des zur Übertragung von Zug- und Schubkräfte auf die Kastenstruktur vorgesehenen Krafteinleitungsmoduls,
- Fig. 8: eine Ausführungsvariante eines aus mehreren Abschnitten bestehender Innenausbaus und
- Fig. 9: Einzelheiten der in Schraubtechnik ausgeführten Verbindung zwischen Einstiegsmodul und Kastenstruktur.

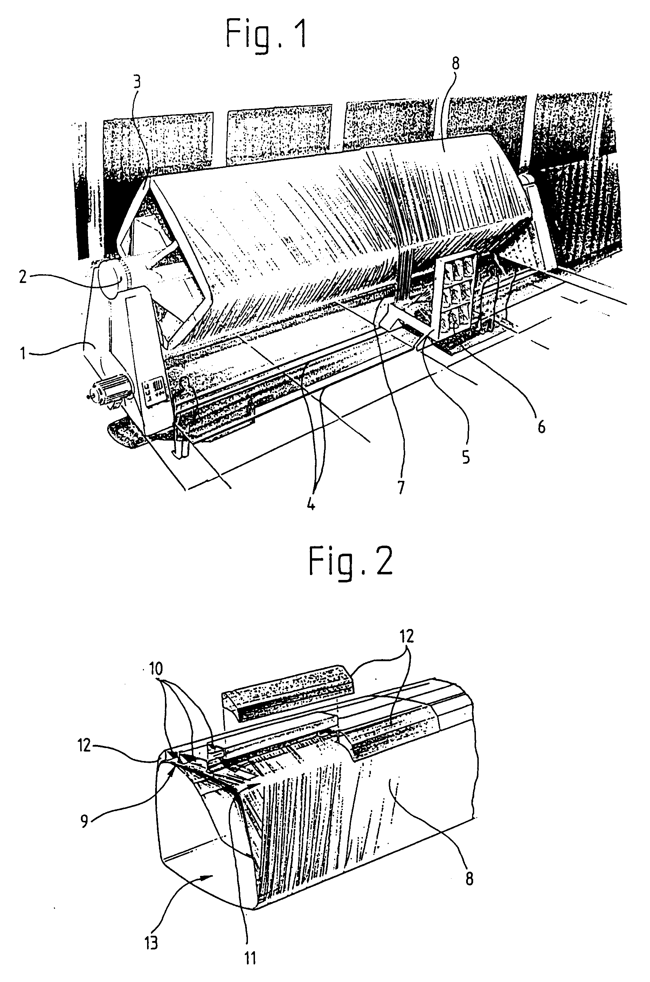

In der Fig. 1 ist eine zur Durchführung des erfindungsgemässen Verfahrens vorgesehene Wickelvorrichtung dargestellt, die aus einem ortsfesten Wickelbock 1, einem vom Wickelbock 1 angetriebenen Dorn 2 und einem vom Dorn 2 getragenen Wickelkern 3 in Wagenkastengrösse besteht. Auf einem auf Schienen 4 verfahrbaren Materialträger 5 sind Faserspulen 6 und/oder Geweberollen 6 angeordnet, deren Fasern und/oder Bänder zu einem mit Kunstharz getränkten Faserstrang 7 zusammengeführt werden. Zur Herstellung einer inneren Wickelschicht 8 wie auch zur Herstellung weiterer Wickelschichten wird der aus beispielsweise Glasfasern oder höherwertigen Kohlenstofffasern bestehende Faserstrang 7 auf den um die Dornachse rotierenden Wickelkern 3 in einander kreuzenden Lagen spiralförmig gewickelt.

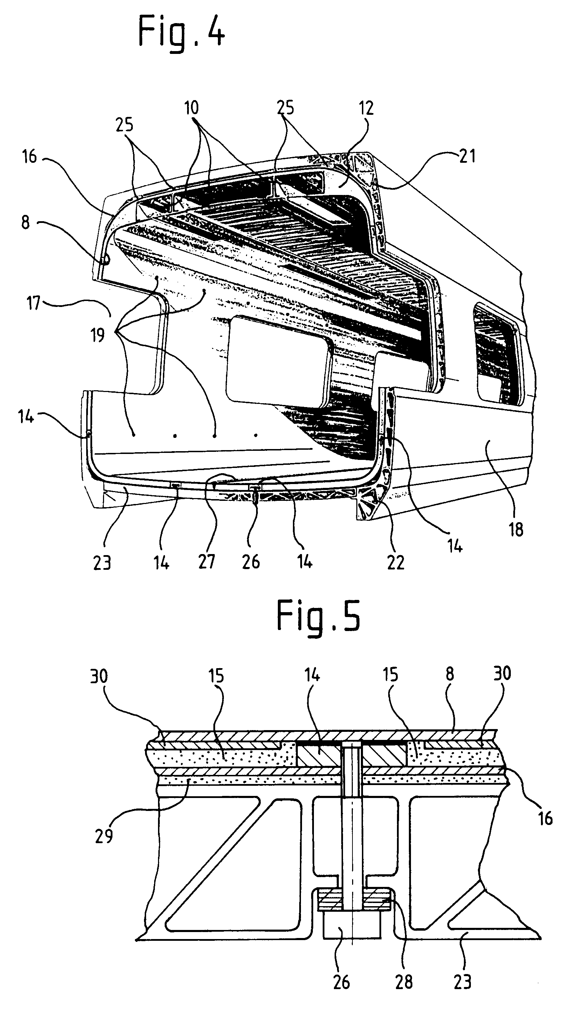

In den Fig. 2 bis 5 ist die vom Wickelkern 3 geformte und getragene innere Wickelschicht 8 dargestellt, mit der in einem Deckenbereich 9 U-förmige nach Innen geöffnete Kanäle 10 für Zu- und Abluftführung, Beleuchtung und Apparate sowie in den Eckbereichen 11 formgebende Isolationskörper 12 verklebt werden. In einem Bodenbereich 13 und in den Seitenwandbereichen werden an der inneren Wickelschicht 8 längs verlaufende Metallschienen 14 und eine als Boden- und Wandheizung dienende[s], in Fig. 5 dargestellte[s] Heiz folie angeordnet. Der Raum zwischen den Metallschienen 14 wird mit Isolationsschaum 15 ausgefüllt, sodass wiederum eine absatzlose, überwickelbare Oberfläche entsteht, die mit einer äusseren Wickelschicht 16 überwickelt wird. Nach dem Aushärten der harzgetränkten Wickelschichten 8;16 wird der in den vorhergehenden Verfahrensschritten hergestellte Innenausbau vom formgebenden Wickelkern 3 entformt. Dann werden in der Decke Bohrungen für Luftzu- und Abfuhr sowie Öffnungen für Beleuchtungskörper angebracht. Fensteröffnungen 17 werden vor oder nach dem Einbau des Innenausbaus in eine tragende Kastenstruktur 18 ausgeschnitten. In den Seitenwandbereichen sind Bohrungen 19 auf Gepäckträgerhöhe und auf Bestuhlungshöhe vorgesehen. Im Bodenbereich 13 wird ein Längsschnitt 20 durchgeführt. Der Innenausbau kann dadurch im Bodenbereich 13 zusammengeschoben werden.

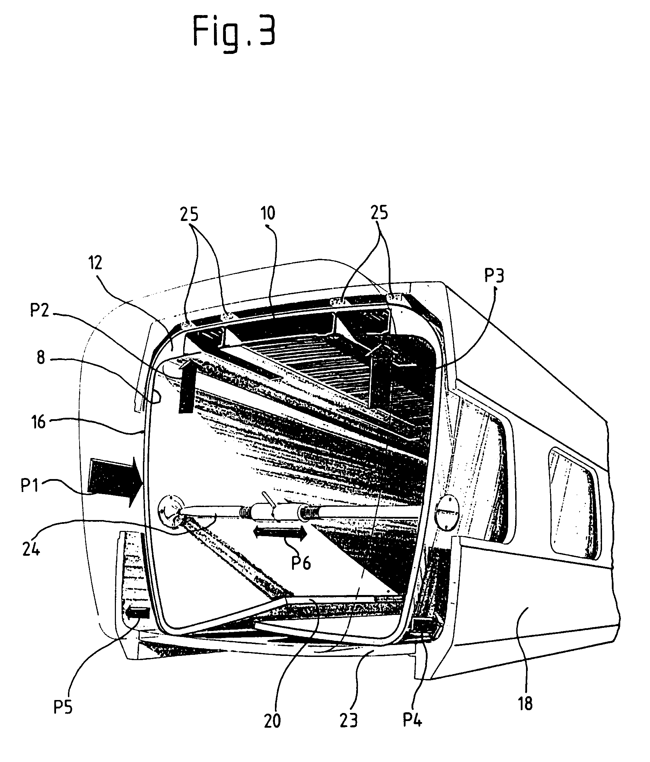

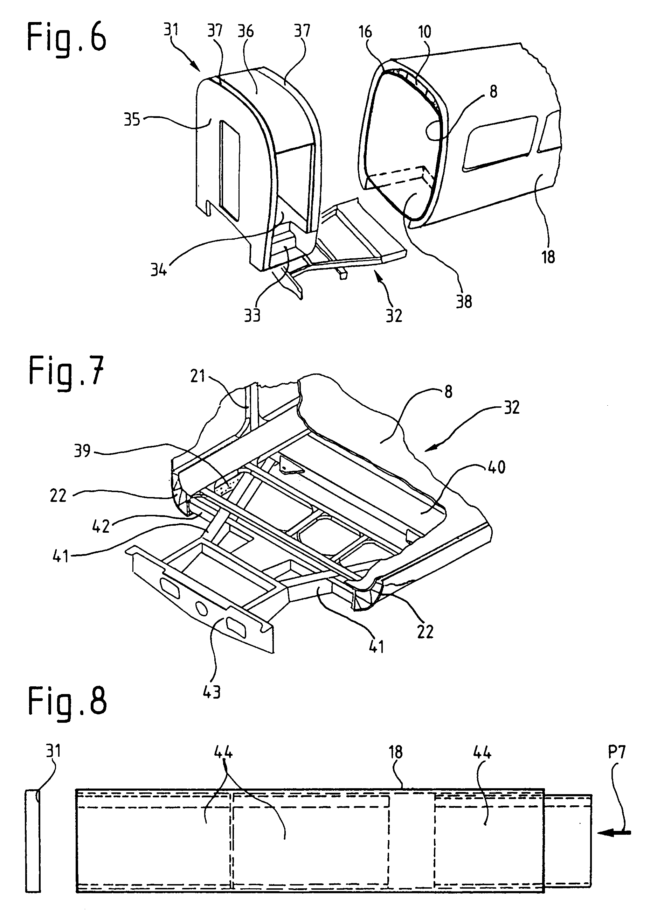

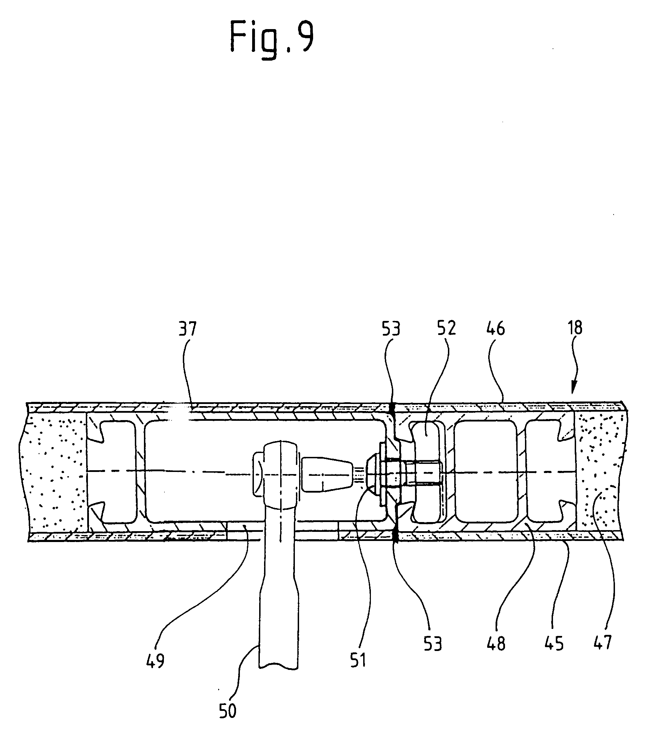

In Fig. 3 symbolisieren Pfeile P1;P2;P3;P4;P5 den Einbau des Innenausbaus in die tragende aus einem Versteifungsgerippe 21, Eckprofilen 22 und Bodenplatten 23 bestehende Kastenstruktur 18. Nach dem mit Pfeil P1 symbolisierten Einschieben des im Bodenbereich 13 zusammengeschobenen Innenausbaus in die Kastenstruktur 18 wird mittels einer im Seitenwandbereich angreifenden und sich in Pfeilrichtung P6 aufweitenden Spannvorrichtung 24 der Innenausbau nach oben in Pfeilrichtung P2;P3 und seitwärts in Pfeilrichtung P4;P5 bewegt. Dabei werden die zwischen Innenausbau und Kastenstruktur 18 eingelegten Bänder 25 elastisch verformt, wodurch diese als Federelement wirken. In einem weiteren Montageschritt wird der Innenausbau vorab durch sich in Gepäckträgerhöhe befindliche Bohrungen 19 mit dem Versteifungsgerippe 21 der Kastenstruktur 18 von innen verschraubt und im Bodenbereich 13 mittels in die Metallschienen 14 eingreifenden ersten Schrauben 26 gemäss Fig. 5 von aussen mit den Bodenplatten 23 verbunden. Abschliessend wird eine durch den Längsschnitt 20 entstandene Trennstelle 27 ausgefugt. Die Bestuhlung wird an den sich im Seitenwandbereich befindlichen Metallschienen 14 durch die darüberliegenden Bohrungen 19 und an den sich im Bodenbereich 13 befindlichen Metallschienen 14 befestigt. Im übrigen ist in Fig. 5 mit 28 eine zwischen Schraubenkopf und Bodenplatte 23 angeordnete Gummiunterlage, mit 29 eine zwischen äusserer Wickelschicht 16 und Bodenplatte 23 angeordnete Dämmschicht und mit 30 die oben erwähnte Heiz folie bezeichnet. In Fig. 6 ist ein durch ein Einstiegsmodul 31 und ein Krafteinleitungsmodul 32 gebildeter Abschluss des aus dem gewickelten Innenausbau und aus der Kastenstruktur 18 bestehenden Wagenkastens gezeigt. Das aus einer Einstiegsnische 33, einer unteren Bodenplatte 34, einer Stirnwand 35, einer Dachschale 36 und aus Spanten 37 bestehende Einstiegsmodul 31 wird durch das Krafteinleitungsmodul 32 gestützt und in Fig. 9 gezeigter Schraubtechnik mit der Kastenstruktur 18 verbunden.

Das in einen Ausschnitt 38 der Kastenstruktur 18 eingreifende Krafteinleitungsmodul 32 ist gemäss Fig. 7 mittels einem Verbindungsflansch 39 mit dem Eckprofil 22 der Kastenstruktur 18 und mittels einem Schemelträger 40 mit einem nicht dargestellten Drehgestell verbunden und übernimmt die Verbindungsfunktion zwischen Drehgestell und Wagenkasten. Ausserdem weist das Krafteinleitungsmodul 32 Diagonalträger 41, ein Querträger 42 und ein Kopfstück 43 auf.

In Fig. 8 ist eine Ausführungsvariante für den Einbau des Innenausbaus in die Kastenstruktur 18 dargestellt. Dabei wird der Innenausbau in mehrere Abschnitte 44 aufgeteilt und diese gemäss Pfeil P7 in die Kastenstruktur 18 eingeschoben. Mit dieser Montagevariante können Toleranz- und Montageprobleme zwischen Innenausbau und Kastenstruktur angegangen werden.

In Fig. 9 ist eine in Schraubtechnik ausgeführte Verbindung zwischen Einstiegsmodul 31 und Kastenstruktur 18 dargestellt. Die von einem inneren Wickel 45 und von einem äusseren Wickel 46 ummantelte Kastenstruktur 18 mit sandwichartig eingelegter Isolation 47 weist stirnseitig ein Randprofil 48 auf. Der Spant 37 des Einstiegsmoduls 31 weist ein Hohlprofil auf, an dem an der Wagenkasteninnenseite eine durch Blindstopfen abdeckbare Öffnung 49 angeordnet ist, durch die ein Schraubwerkzeug 50 eingeführt wird, mittels dem zweite Schrauben 51 in stirnseitig am Randprofil 48 angeordnete Klemmstücke 52 eingeschraubt werden. Eine Kittfuge 53 dichtet die Stossflächen zwischen Spant 37 und Randprofil 48. Die in Fig. 9 dargestellte Schraubtechnik wird auch zum Verbinden von mehreren angrenzenden Wagenkastenmodulen eingesetzt.

## Patentansprüche

1. Verfahren zur integralen Herstellung eines Innenausbaus für Wagenkasten mit einer selbsttragenden Kastenstruktur (18), bei dem in einem ersten Verfahrensschritt eine innere Wickelschicht (8) auf einen formgebenden, wagenkastengrossen Wickelkern (3) gewickelt wird, in einem zweiten Verfahrensschritt im Deckenbereich (9) Kanäle (10), in Eckbereichen (11) formgebende Körper (12) und im Bodenbereich (13) und in den Seitenwandbereichen längs verlaufende Schienen (14) mit der inneren Wickelschicht (8) verbunden werden, in einem dritten Verfahrensschritt der Raum zwischen den Schienen (14) mit Isolationsschaum (15) ausgefüllt wird, in einem vierten Verfahrensschritt der in den vorhergehenden Verfahrensschritten hergestellte Verbund mit einer äusseren Wickelschicht (16) umwickelt wird, in einem fünften Verfahrensschritt der in den vorhergehenden Verfahrensschritten hergestellte Innenausbau vom formgebenden Wickelkern (3) entformt wird und vorzugsweise als sechsten Verfahrensschritt insbesondere an den Kanälen (10) Öffnungen und in den Seitenwänden Bohrungen (19) angebracht werden,
dadurch gekennzeichnet,
dass der durch die vorhergehenden Verfahrensschritte hergestellte Innenausbau im Bodenbereich (13) durch einen Längsschnitt (20) aufgeschnitten wird, in einem weiteren Verfahrensschritt der im vorhergehenden Verfahrensschritt im Bodenbereich (13) zusammengeschobene Innenausbau in die selbstragende Kastenstruktur (18) eingeschoben wird und in einem letzten Verfahrensschritt der Innenausbau mittels einer im Seitenwandbereich angreifenden Spannvorrichtung (24) der Innenform der Kastenstruktur (18) angepasst wird und mit dieser im Seitenwandbereich und im Bodenbereich (13) verbunden wird.

2. Verfahren nach Anspruch 1,
dadurch gekennzeichnet,
dass im zweiten Verfahrensschritt im Bodenbereich (13) und in den Seitenwandbereichen eine als Boden- und Wandheizung dienende Heizfolie (30) mit der inneren Wickelschicht (8) verbunden wird und dass im sechsten Verfahrensschritt im inneren Deckenbereich (9) der Kastenstruktur (18) längs verlaufende elastische Bänder (25) angeordnet werden, die nach dem Einschieben des Innenausbaus als Federelemente wirken.

3. Verfahren nach den Ansprüchen 1 und 2,
dadurch gekennzeichnet,
dass der Innenausbau im Bodenbereich (13) von unten mittels in die Metallschienen (14) eingreifenden ersten Schrauben (26) und im Seitenwandbereich auf Gepäckträgerhöhe von innen mit der Kastenstruktur (18) verbunden wird.

4. Verfahren nach den vorhergehenden Ansprüchen,
dadurch gekennzeichnet,
dass der Innenausbau aus mehreren Abschnitten (44) besteht, die nacheinander in die selbstragende Kastenstruktur (18) eingeschoben werden und mit dieser verbunden werden.

5. Verfahren nach den Ansprüchen 1 bis 4,
dadurch gekennzeichnet,
dass im sechsten Verfahrensschritt der Innenausbau mit Fensteröffnungen (17) versehen wird.

6. Verfahren nach den Ansprüchen 1 bis 4,
dadurch gekennzeichnet,
dass in einem neunten Verfahrensschritt der Innenausbau mit Fensteröffnungen (17) versehen wird.

7. Wagenkasten, der einen in die Kastenstruktur (18) eingeschobener Innenausbau nach einem der vorstehenden Ansprüche aufweist, wobei am Wagenkastenende im Bodenbereich (13) ein Ausschnitt (38) in der Kastenstruktur (18) vorgesehen ist in den ein ein Einstiegsmodul (31) tragendes Krafteinleitungsmodul (32) eingreift.

8. Wagenkasten nach Anspruch 7,
dadurch gekennzeichnet,
dass das Krafteinleitungsmodul (32) ein mit einem Drehgestell in Verbindung stehender Schemelträger (40), mit Eckprofilen (22) der Kastenstruktur (18) in Verbindung stehende Verbindungsflansche (39), Diagonalträger (41), Querträger (42) und ein Kopfstück (43) aufweist.

9. Wagenkasten nach Anspruch 7,
dadurch gekennzeichnet,
dass das Einstiegsmodul (31) eine Einstiegsnische (33), eine Bodenplatte (34), eine Stirnwand (35), eine Dachschale (36) und verbindende Spanten (37) aufweist.

10. Wagenkasten nach Anspruch 9,
dadurch gekennzeichnet,
dass die Kastenstruktur (18) stirnseitig ein Randprofil (48) aufweist, das stirnseitig mit der Stirnseite eines Spanten (37) mittels zweiten in im Randprofil (48) angeordnete Klemmstücke (52) eingreifende Schrauben (51) verbunden ist.

11. Wagenkasten nach Anspruch 10,
dadurch gekennzeichnet,
dass der mit dem Randprofil (48) in Verbindung stehende Spant (37) ein Hohlprofil aufweist, an dem an der Wagenkasteninnenseite eine durch Blindstopfen abdeckbare Öffnung (49) angeordnet ist, durch die ein Schraubwerkzeug (50) zum Einschrauben der zweiten Schrauben (51) einführbar ist.

12. Wagenkasten nach Anspruch 10,
dadurch gekennzeichnet,
dass eine die Stossflächen zwischen Spant (37) und Randprofil (48) dichtende Kittfuge (53) vorgesehen ist.

## Claims

1. Method for the integral production of an internal construction for coach bodies with a self-supporting body structure (18), in which an inner winding layer (8) is wound in a first method step onto a shape-determining winding core (3) of the size of the coach body, channels (10) in the ceiling region (9), shape-determining bodies (12) in corner regions (11) and rails (14) extending longitudinally in the floor region (13) and in the side wall regions are connected in a second method step with the inner winding layer (8), the space between the rails (14) is filled out with insulating foam (15) in a third method step, the composite produced in the preceding method steps is wound around by an outer winding layer (16) in a fourth method step, the internal construction produced in the preceding method steps is removed from the shape-determining winding core (3) in a fifth method step and openings particularly at the channels (10) and bores (19) in the side walls are made preferably in a sixth method step, characterised thereby, that the internal construction produced in the preceding method steps is cut open in the floor region (13) by a longitudinal cut (20), the internal construction, pushed together in the floor region (13) (and elastically deformed) in the preceding method step, is pushed into the self-supporting body structure (18) in a further method step and the internal construction is adapted by means of a tightening device (24), which engages in the side wall region, to the internal shape of the body structure (18) and connected therewith in the side wall region and in the floor region (13) in a last method step.

2. Method according to claim 1, characterised thereby, that a heating foil (30) serving as floor and wall heating is connected with the inner winding layer (8) in the floor region (13) and in the side wall regions in the second method step and that longitudinally extending elastic bands (25), which act as spring elements after the insertion of the internal construction, are arranged in the inner ceiling region (9) of the body structure (18) in the sixth method step.

3. Method according to the claims 1 and 2, characterised thereby, that the internal construction is connected with the body structure (18) from below in the flow region (13) by means of first screws (26) engaging into the metal rails (14) and from inside in the side wall region at luggage rack height.

4. Method according to the preceding claims, characterised thereby, that the internal construction consists of several portions (44), which are pushed one after the other into the self-supporting body structure (18) and connected therewith.

5. Method according to the claims 1 to 4, characterised thereby, that the internal construction is provided with window openings (17) in the sixth method step.

6. Method according to the claims 1 to 4, characterised thereby, that the internal construction is provided with window openings (17) in a ninth method step.

7. Coach body which comprises an internal construction, which is pushed into the body structure (18), according to one of the preceding claims, wherein a cut-out (38) in the body structure (18), into which a force-introducing module (32) carrying a boarding step module (31) engages, is provided in the floor region (13) at the coach body end.

8. Coach body according to claim 7, characterised thereby, that the force-introducing module (32) comprises a bogie carrier (40) standing in connection with a rotary frame, connecting flanges (39) standing in connection with corner profile sections (22) of the body structure (18), diagonal bearers (41), transverse bearers (42) and a head member (43).

9. Coach body according to claim 7, characterised thereby, that the boarding step module (31) comprises a boarding step recess (33), a floor plate (34), an end wall (35), a roof shell (36) and connecting bulkheads (37).

10. Coach body according to claim 9, characterised thereby, that the body structure (18) at the end face comprises a rim profile section (48), which is connected at the end face with the end face of a bulkhead (37) by means of second screws (51) engaging into clamping members (52) arranged in the rim profile section (48).

11. Coach body according to claim 10, characterised thereby, that the bulkhead (37), which stands in connection with the rim profile section (48), displays a hollow profile section, at which an opening (49), which is coverable by dummy plugs and through which a screwdriver tool (50) for the screwing-in of the second screws (51) is introducible, is arranged at the inward side of the coach body.

12. Coach body according to claim 10, characterised thereby, that a putty joint (53) is provided, which seals the abutting surfaces between the bulkhead (37) and the rim profile section (48).

## Revendications

1. Procédé pour la fabrication intégrale d'un revêtement intérieur pour caisse de véhicule comportant une structure de caisse monocoque (18), selon lequel, lors d'une première phase, on enroule une couche d'enroulement intérieure (8) sur un noyau d'enroulement de façonnage (3) de la taille de la caisse de véhicule, lors d'une deuxième phase, on relie à la couche d'enroulement intérieure (8) des conduits (10) dans la zone du plafond (9), des corps de façonnage (12) dans les zones des coins (11), et des rails longitudinaux (14) dans la zone du plancher (13) et des parois latérales, lors d'une troisième phase, on remplit l'espace situé entre les rails (14) de mousse isolante (15), lors d'une quatrième phase, on enveloppe le matériau composite fabriqué lors des phases précédentes à l'aide d'une couche d'enroulement extérieure (16), lors d'une cinquième phase, on enlève le revêtement intérieur fabriqué lors des phases précédentes du noyau d'enroulement de façonnage (3) et de préférence comme sixième phase, on réalise des ouvertures, en particulier sur les conduits (10) et des perçages (19) dans les parois latérales,
caractérisé en ce qu'on ouvre le revêtement intérieur fabriqué lors des phases précédentes grâce à une coupe longitudinale (20) dans la zone du plancher (13), lors d'une autre phase, on introduit dans la structure de caisse monocoque (18) le revêtement intérieur déformé par élasticité et resserré dans la zone du plancher (13) lors de la phase précédente, et lors d'une dernière phase, on adapte le revêtement intérieur à la forme intérieure de la structure de caisse (18) à l'aide d'un dispositif de serrage (24) agissant dans la zone des parois latérales, et on le relie à ladite structure de caisse (18) dans la zone des parois latérales et dans la zone du plancher (13).

2. Procédé selon la revendication 1, caractérisé en ce que lors de la deuxième phase, on relie une feuille de chauffe (30) servant de chauffage par le sol et de chauffage mural à la couche d'enroulement intérieure (8), dans la zone du plancher (13) et dans les zones des parois latérales, et en ce que lors de la sixième phase, on dispose dans la zone de plafond intérieure (9) de la structure de caisse (18) des bandes élastiques longitudinales (25) qui agissent comme éléments élastiques après l'introduction du revêtement intérieur.

3. Procédé selon les revendications 1 et 2, caractérisé en ce qu'on relie le revêtement intérieur à la structure de caisse (18) par le bas, dans la zone du plancher (13), à l'aide de premières vis (26) qui pénètrent dans les rails métalliques (14), et de l'intérieur, à la hauteur des porte-bagages, dans la zone des parois latérales.

4. Procédé selon les revendications précédentes, caractérisé en ce que le revêtement intérieur se compose de plusieurs sections (44) qui sont introduites successivement dans la structure de caisse monocoque (18) et reliées à celle-ci.

5. Procédé selon les revendications 1 à 4, caractérisé en ce qu'on dote le revêtement intérieur de baies de fenêtres (17) lors de la sixième phase.

6. Procédé selon les revendications 1 à 4, caractérisé en ce qu'on dote le revêtement intérieur de baies de fenêtres (17) lors d'une neuvième phase.

7. Caisse de véhicule qui comporte, introduit dans la structure de caisse (18), un revêtement intérieur selon l'une des revendications précédentes, étant précisé qu'il est prévu à l'extrémité de la structure de caisse de véhicule (18), dans la zone du plancher (13), une découpure (38) dans laquelle entre un module d'introduction de forces (32) qui porte un module d'entrée (31).

8. Caisse de véhicule selon la revendication 7, caractérisée en ce que le module d'introduction de forces (32) comporte un support de traverse pivotante (40) relié à un bogie, des brides de liaison (39) reliées à des cornières (22) de la structure de caisse (18), des supports diagonaux (41), des traverses (42) et une traverse d'attelage (43).

9. Caisse de véhicule selon la revendication 7, caractérisée en ce que le module d'entrée (31) comprend une niche d'entrée (33), une plaque de plancher (34), une paroi frontale (35), un plafonnage (36) et des anneaux de raidissement de liaison (37).

10. Caisse de véhicule selon la revendication 9, caractérisée en ce que la structure de caisse (18) comporte, côté frontal, un profité de bordure (48) qui est relié, côté frontal, au côté frontal d'un anneau de raidissement (37) à l'aide de secondes vis (51) qui entrent dans des pièces de serrage (52) disposées dans le profité de bordure (48).

11. Caisse de véhicule selon la revendication 10, caractérisée en ce que l'anneau de raidissement (37) relié au profilé de bordure (48) comporte un profilé creux sur lequel est disposée, sur le côté intérieur de la caisse de véhicule, une ouverture (49) qui est apte à être fermée par des obturateurs cachés et par laquelle on peut introduire un outil de vissage (50) destiné à visser les secondes vis (51).

12. Caisse de véhicule selon la revendication 10, caractérisée en ce qu'il est prévu un joint en ciment (53) qui assure l'étanchéité des surfaces d'about entre l'anneau de raidissement (37) et le profilé de bordure (48).
